# EUROPEAN PATENT SPECIFICATION

(11) **EP 1 486 036 B1**
(45) Date of publication and mention of the grant of the patent: **12.12.2012**
(21) Application number: 03710565.7
(22) Date of filing: 10.03.2003
(51) Int. Cl.: H04L 12/28, H04L 12/22, H04W 84/12, H04W 12/06, H04L 29/06, H04W 92/02

(54) **COMPATIBILITY BETWEEN VARIOUS W-LAN STANDARDS**
KOMPATIBILITÄT ZWISCHEN VERSCHIEDENEN W-LAN STANDARDS
COMPATIBILITE ENTRE DIVERS STANDARDS DE RESEAUX LOCAUX SANS FIL

(30) Priority: 08.03.2002 US 363326 P
(43) Date of publication of application: 15.12.2004
(73) Proprietor: Telefonaktiebolaget LM Ericsson (publ), 164 83 Stockholm (SE)
(72) Inventor: RYDNELL, Gunnar, S-421 59 V Frölunda (SE); LINDSKOG, Jan, S-435 43 Pixbo (SE); ROMMER, Stefan, S-416 73 Göteborg (SE); JOHANSSON, Per-Erik, S-412 53 Göteborg (SE)
(74) Representative: Vejgaard, Christian
(86) International application number: PCT/SE2003/000395
(87) International publication number: WO 2003/077476

(56) References cited:
- ANTON B. ET AL.: 'Best current practices for wireless internet service provider (WISP) roaming' VERSION 1.0, [Online] February 2003, pages 1 - 37, XP002963834 Retrieved from the Internet: <URL:www.weca.net/opensection/downloads/wis pr_v1.0.pdf> [retrieved on 2003-05-22]

## Description

### Field of the invention

The present invention relates to security aspects in the area of public access Wireless LANs (WLAN). More specifically the invention concerns compatibility between various versions of the W-LAN standards in

### Background

The majority of today's public access WLANs uses Access Points that conform to the IEEE 802.11 standard, in particular 802.11 b. A newer standard 802.11 a has also gained popularity. In the following the above standards will be referred to as legacy standards.

A forthcoming version of the standard, IEEE 802.11i, addresses improvement of Security. A need has been found for a new security framework overcoming the low level of security of 802.11 b, including the now broken WEP encryption and MAC layer authentication. Therefore, a new encryption algorithm, AES, and a new authentication mechanism, based on mutual authentication, EAP signalling and 802.1 x are included in the new security framework, as discussed in IEEE 802.11i.

WECA is an industry organization for promoting IEEE 802.11 WLAN and for establishing interoperability requirements for 802.11 products. WECA is also currently writing a recommended practice with the goal to increase the possibility for roaming between different Wireless Internet Service Providers (WISP). This recommended practice specifies a public access WLAN architecture that is briefly discussed below.

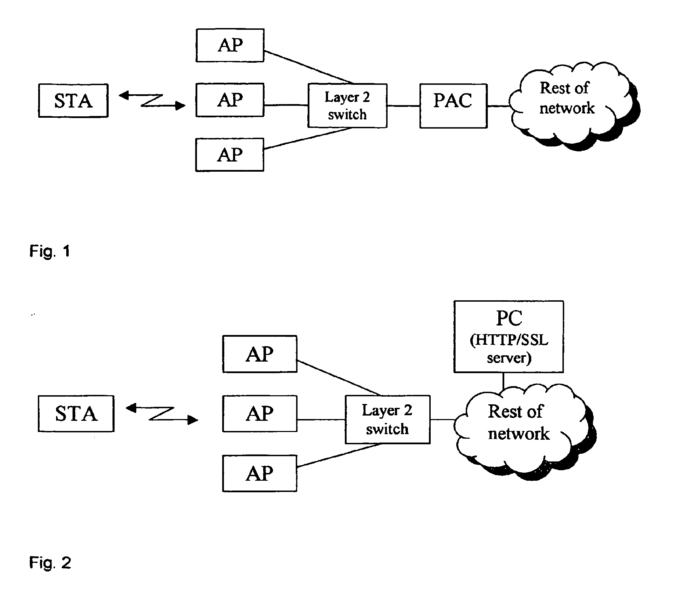

The current state of the art, as recommended by WECA's WISPr committee, is to place the task of authentication into a special network node, a Public Access Control (PAC) Gateway. The APs are all connected directly to the PAC and the only access to the rest of the network goes through the PAC (see figure 1).

The Access Points uses "open system" authentication and no encryption when communicating with the STAs. There is thus no access control in the APs. The real authentication and access control is done in the PAC gateway. Login credentials are transported between the STA and the PAC over HTTP protected by SSL. The process is as follows: When the user starts the laptop, the WLAN NIC associates with an AP. The user then starts a web browser on the STA. The PAC intercepts any HTTP request and sends a login web-page to the STA. The user enters username and password on the web page. The PAC then verifies the credentials, e.g. against a remote authentication server. If the credentials are ok, the PAC starts to forward traffic between the STA and the rest of the network.

It is claimed by WECA that this is the solution implemented by the majority of WISPs today. This architecture has also been implemented in the first release of Ericsson's WLAN-GPRS inter-working solution. In that solution, the PAC gateway is called Access Serving Node (ASN)).

An improved security standard for 802.11 has been suggested in IEEE 802.11i. This new standard will make it possible to perform a much-improved authentication in the AP than is possible with the 802.11-1999 standard. IEEE 802.11i will use IEEE 802.1X and EAP as the security framework. This means that there is no longer need for a web-based login in a PAC gateway, a satisfactory solution can be achieved with just 802.11 i-capable APs and STAs. IEEE 802.11i also specifies enhanced encryption algorithms whose operation is closely tied to the 802.1X authentication procedure.

A security problem occurs when mixing legacy equipment, i.e. equipment compliant with existing standard, with 802.11i-capable equipment in the same cell. The problem is simply one of distributed responsibility. According to the WECA reference model for legacy WLAN networks, the PAC will be responsible for authenticating the legacy STAs, while the AP itself, according to the IEEE 802.11i model, will be responsible for authenticating new 802.11i STAs. Filtering and access control is thus done at two places in the network. This architecture may enable access for fraudulent users signalling to the AP that it is a legacy STA, while at the same time indicating to the PAC that it is a new 802.11 i-enabled STA. It is seen that this STA may be accessing the system with no authentication at all.

Prior art document EP1081895 discloses a network comprising a LAN (local area network) to which a number of access points (AP's) are connected. The LAN is connected to an authentication server, an inner firewall router, a VPN (virtual private network) for remote access and an outer firewall router connecting to the Internet. Authentication devices (such as smart cards) are provided both in the AP's and in wireless devices communicating with the AP's.

The authentication server works in conjunction with the AP's and the wireless devices and their respective authentication devices to allow access only to those authorized by the networks administrators. An operator establishes an air communication channel between the wireless device and the AP, during which an encryption mechanism is exchanged for future communication.

The wireless device determines if the AP is a valid access point by analyzing an authentication message. If it is not, the air communications channel between the wireless device and the AP is disabled. If the AP is valid a second authentication device in the wireless device generates an identification key which involves a log on name and a password to an operator. The AP analyzes a decrypted portion of the second authentication message to determine whether the wireless device is valid. If valid, the AP establishes a control channel with the authentication server. The authentication server verifies the operators log on name and password. If not valid, the authentication server denies access to the wired LAN.

Prior art document W00143467 shows a wireless network comprising a wireless communication server, a switch connecting to the Internet and a plurality of mini-access points connected by wire, using existing protocols, such as Ethernet, for connection to the wireless communication server.

The wireless communication server controls the mini-access points and filters unnecessary traffic and forwards relevant data to correct mini access points. Moreover, the wireless server includes mini-access point management, security QoS, etc.

The mini access points are simple devices, which rarely needs updating, and are only required to receive data or receiver management information and forwarding data to the wireless server. It is not required that the mini access points examine data to determine where to send it. The filtering in the wireless server is based on remote unit identification, whereby the address of the remote unit is used.

Prior art document W00203730 shows an arrangement comprising a mobile terminal comprising a GSM SIM (Subscriber Identity Module) card and an 802.11 WLAN (wireless LAN) interface for communicating with an AP. The mobile terminal may establish an ad hoc network with other WLAN equipped mobile terminals as well as a WLAN network comprising a comprising access to the Internet through a public access controller (PAC) that controls the access to the internet. The mobile terminal may couple to the mobile telephone network comprising GSM (Global system for Mobile communications) entities such ah MSC/VLR (mobile Switching centre / visiting location register) and an entity for providing authentication from an WLAN equipped mobile terminal via the Internet through known GSM signalling to a GSM Home Location Register (HLR) for authenticating the SIM module.

### Summary of the invention

It is a first object to provide an access point which provide authentication and possibly to legacy IEEE 802,11 WLAN mobile stations while providing access for IEEE 802.11i mobile stations in a secure and reliable manner

This object has been achieved by the subject matter defined in claims 1 and 10.

Further advantages will appear from the following detailed description of the invention.

### Brief description of the figures

- Fig. 1: shows a known architecture including a public access gateway providing WEP based authentication, and filtering if the provided authentication is not proved.
- fig. 2: shows a network architecture according to a first alternative of a first embodiment of the invention, including a Public Access Control gateway (PAC),
- fig. 3: shows, 3 flowchart for an Access Point (AP) of a first alternative of a first embodiment according to the invention, the Access Point (AP) residing in a network architecture as shown in fig. 2,
- fig. 4: shows aspects of the signalling protocol relating to a legacy station, the associated AP and the Public Access Control gateway (PAC) according to the first alternative of a first embodiment of the invention, the Access Point (AP) operating as shown in fig. 3,
- fig. 5: shows aspects of the signalling protocol relating to an 802.11i station, the associated AP and the Public Access Control gateway (PAC) according to the first alternative of the first embodiment of the invention, the Access Point (AP) operating as shown in fig. 3,
- fig. 6: shows a flowchart for **an access** point of a second alternative of a first embodiment of the invention, the Access Point (AP) residing in a network architecture as shown in fig. 1,
- fig. 7: shows aspects of the signalling protocol relating to a legacy station, the associated Access Point (AP) and the Public Access Control gateway (PAC) according to the second alternative of the first embodiment of the invention, the Access Point (AP) operating as shown in fig. 5, and
- fig. 8: shows aspects of the signalling protocol relating to an 802.11i i station, the associated Access Point (AP) and the Public Access Control gateway (PAC), according to the second alternative of the first embodiment of the invention, the Access Point (AP) operating as shown in fig. 5.

### Detailed description of preferred embodiments of the invention

### First embodiment of the invention

A new signalling protocol between AP and PAC has been provided according to the first embodiment of the invention.

In this solution, the PAC does the web-login and the APs implements the 802.11 i functionality, according to the reference architecture advised by WECA and IEEE. Both legacy and 802.11i STAs can authenticate. Legacy STAs authenticate over the web interface against the PAC gateway and 802.11i-capable STAs authenticate using EAP and 802.1X in the AP. Authentication is usually performed against a backend server (a AAA server) and it is only the access control function that is performed by the AP and PAC respectively. We will however not address details regarding a potential AAA server since it is the access control function that is central to this embodiment. Authentication against an AAA server is one possible implementation.

In order to coordinate the access control state machines in the AP and the PAC a new signalling protocol between AP and PAC has to be introduced. There are several possible alternatives:

### First alternative of first embodiment

In this solution the PAC is responsible for web-login but is otherwise completely transparent. The AP on the other hand filters all frames to/from unauthenticated STAs and shall only forward frames from authenticated STAs.

If an 802.11 i-capable STA associates with the AP and performs a successful 802.1X-authentication, the AP starts to forward frames to/from this STA.

If a legacy STA associates with the AP, the PAC has to authenticate it. The AP shall send frames from the STA to the PAC in a recognizable and preferably secure way. The AP could e.g. encapsulate the frames in an IPSec tunnel to the PAC. The AP and PAC could also share a secret that the AP uses to encrypt and authenticate each frame. In any case, the PAC can recognize these packets as traffic coming from an unauthenticated STA. The PAC can then process these packets. If the packets e.g. contain DHCP requests or HTTP requests for the login web page, the PAC responds to the requests while other packets are discarded. When the web-login is successfully completed, the PAC sends a special message to the AP telling it, that the STA is authenticated and that the AP can start to forward traffic to/from the STA without encapsulating it in any special way.

An advantage of this solution is that the network architecture can be relaxed; not all traffic has to pass through the PAC. Instead the PAC could be any kind of PC with a HTTP/SSL server (see example in figure 2).

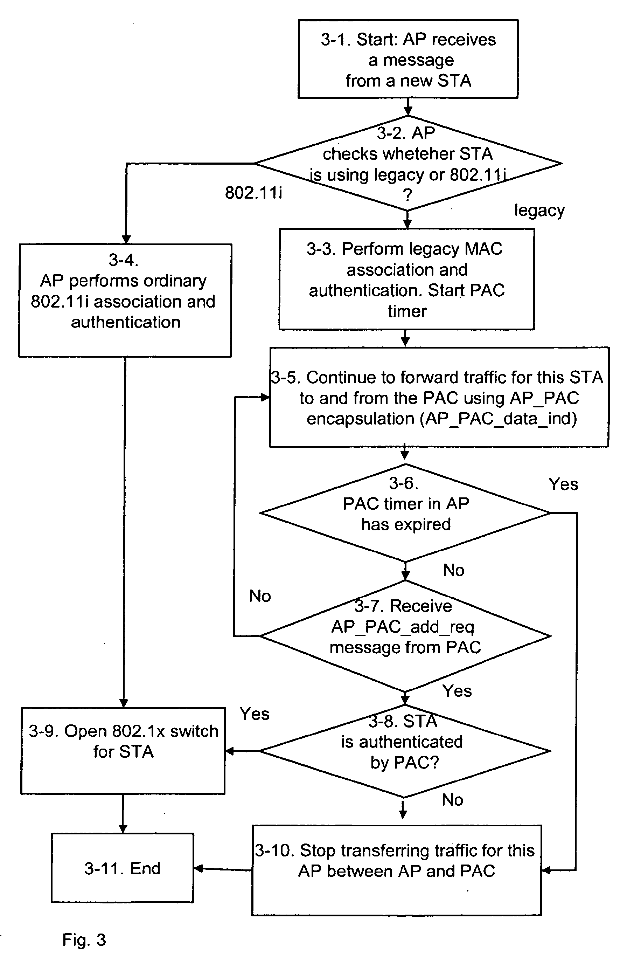

According to step 3-1 in fig. 3 the AP receives a message form the AP, step 3-1, whereupon the AP determines whether the station is a legacy station or an 802.11i station, step 3-2.

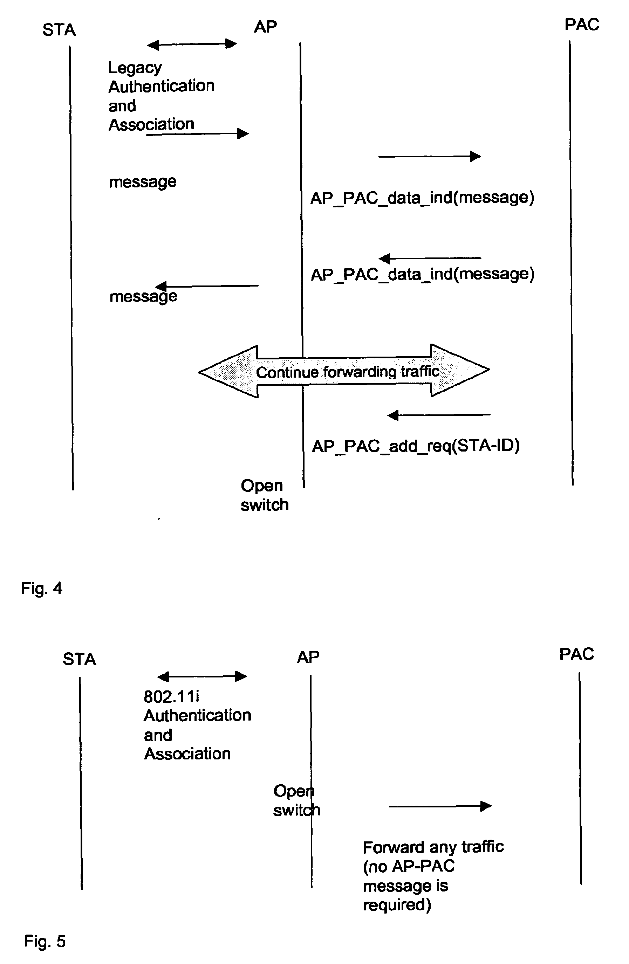

As illustrated in fig. 4, the normal legacy procedure for association and authorisation is carried our enabling the station to communicate with AP. This has been shown by step 3-3 in fig. 3.

Any message from the station in question will trigger a following AP-PAC_data_ind message from the AP towards the PAC, indicating to the PAC that the station needs authentication before the PAC.

In order to accomplish login, a PAC timer may be set in the AP and traffic is forwarded to and from the PAC for instance using AP_PAC encapsulation, step 3-3

The PAC, in turn, transmits a WEB based Login page to the AP, which is delivered to the station. The user of the station may then provide the credentials according to the normal procedure for login, for instance a secret PIN code.

The PAC responds with an AP_PAC_add_req message, step 3-7, informing whether the PAC has accepted or barred the station. If the station is authenticated, step 3-8; the AP "opens the switch" in the AP, and allows traffic from the station to pass without filtering.

If the login procedure could not be completed within the time limit indicated according to the PAC timer and the test according to step 3-6, the AP stops transferring traffic from the particular station.

If - instead of a legacy station - a 802-11 i station is detected in step 3-2, the legacy station associates and authenticates with the AP according to the ordinary 802.11i procedures, as shown in fig. 5, the AP "opens the switch" and forwards any traffic. No AP_PAC message is required before the PAC. These steps have been shown in step 3-4 and 3-9 In fig. 3

### Second alternative of first embodiment

In this solution, the filtering of unauthenticated traffic is performed by the PAC and not by the AP. If the AP receives a frame not destined to it, it always forwards the frame. It is then up to the PAC to filter unauthenticated frames and to perform the web-login procedure. For this purpose, an architecture according to fig. 1 is chosen.

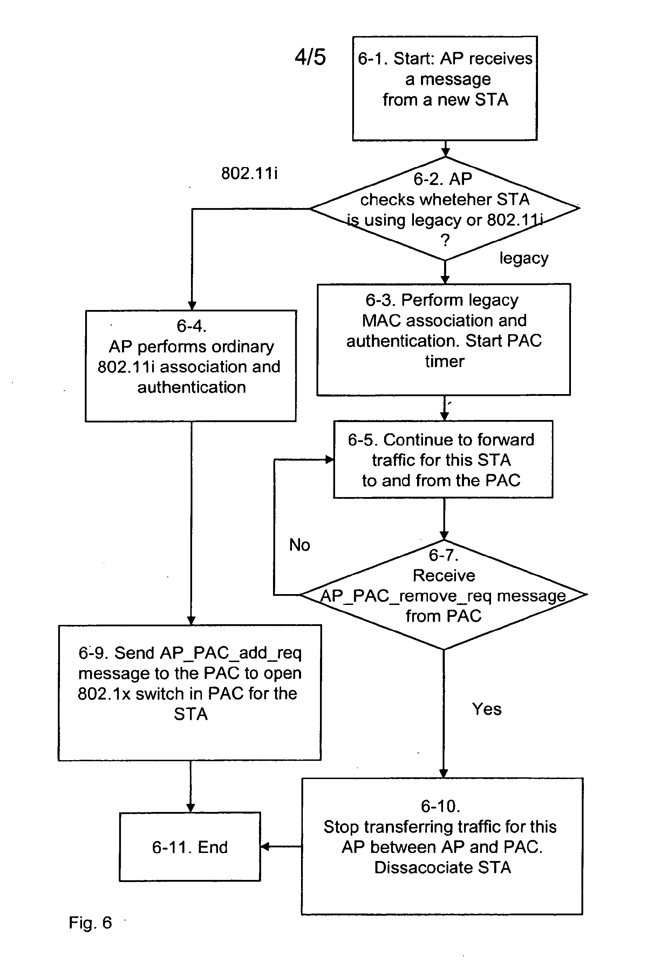

In fig. 6, this procedure has bee shown, whereby in step 6-1 the AP receives a message from a new station and in step 6-2 the AP determines whether a legacy or 802.11 i station is encountered.

If an 802.11i -capable STA sends EAP frames destined to the AP, the AP processes these (possibly by forwarding them to a AAA server) and performs the 802.1X-authentication procedure, cf. step 6-4 in fig. 6. If the procedure is successful, the AP sends a special message to the PAC, step 6-8, indicating that the STA is authenticated and that the PAC should start forwarding frames to/from this STA. This message should preferably be sent in a secure way.

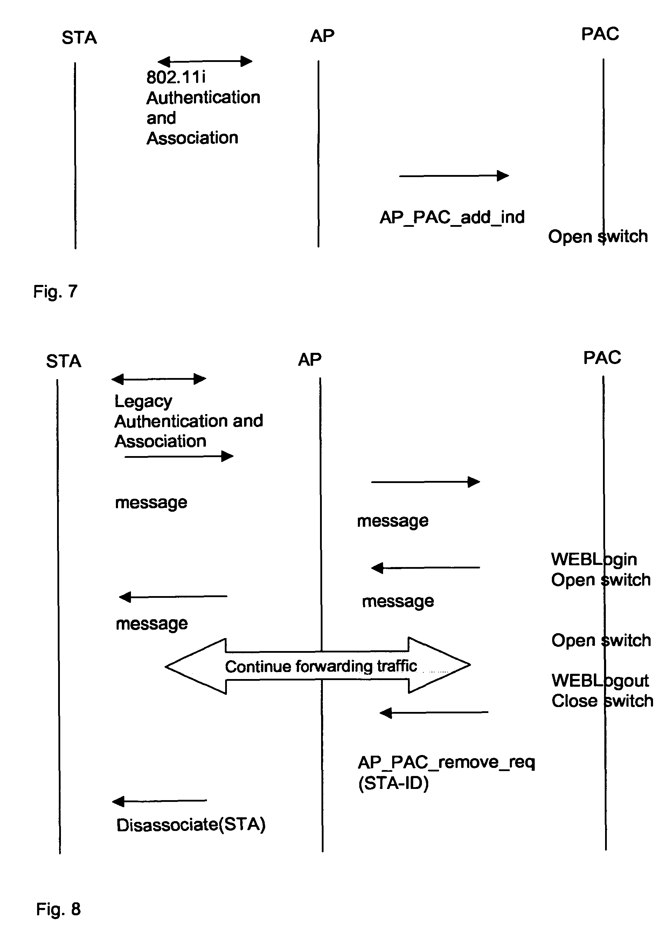

If - on the other hand - a legacy STA associates with the AP, as illustrated in fig. 8, the AP performs the normal legacy association and authentication procedure, step 6-3. At the same time, a PAC timer is set in the AP with the same purpose as set out above. The AP continues to forward traffic to and from this station, step 6-3. If during this time, the station sends any message to the PAC, the PAC responds with the WEB login page back to the station. If a correct password is received in the PAC from the station, the PAC opens the switch in the PAC. If on the other hand an erroneous password is received, the PAC closes the switch and transmits a AP_PAC_remove_req to the AP, step 6-7 effectuating a stop of transferring of traffic for the AP in question between the AP and the PAC and effectuating a disassociation of the station before the AP, step 6-10.

### Third alternative of first embodiment

According to the third alternative of the first embodiment, both AP and PAC performs filtering

This solution is a combination of solutions above. In order for traffic from an STA to pass, both the AP and the PAC must forward the frame.

In conclusion, the invention describes a new solution to the well-known security problem in 802.11 WLANs. The method is compatible with protocols standardised by IEEE and WECA, but goes one step further and specifies a new protocol between the network nodes in the WECA reference architecture. Furthermore, 3 alternative methods are described, including modifications to security architecture described by the WECA reference architecture.

A mechanism, such as described here, will be necessary in order to provide a secure WLAN network when 802.11i i equipment will start to appear on the market. It is not a new authentication mechanism that is invented; authentication of a STA is done using the WECA and the IEEE authentication methods. The invention solves the problem of distributed responsibility, by tying together the WECA and IEEE security protocols and synchronising the security information in the fixed nodes in the WLAN backbone.

## Claims

1. Access point (AP) being able to perform both legacy and 802.11i association and authentication, the access point comprising means being adapted to
- if a 802.11i station (STA) is encountered (3-2; 6-2), performing 802.11i association and authentication and if successful (3-4), the access point effectuating that frames are forwarded to / from the station (3-9; 6-9),
- if a legacy station (STA) is encountered (3-2; 6-2), the access point being adapted to
-- performing legacy medium access control association and authentication (3-3; 6-3) and
-- if successful, the access point being adapted to continuing to forward traffic for the station to and from a public access control gateway (PAC) (3-5; 6-5) allowing the public access control gateway (PAC) to transmit a web based login page to the legacy station,
-- if the station is not authenticated (3-8; 6-7) by the public control access gateway, the access point being adapted to stopping (3-10; 6-10) transferring traffic for the station between the access point and the public access control gateway (PAC)

2. Access point according to claim 1, wherein the authentication by the public control access gateway is determined as successful if a message (AP_PAC_add_req) is received from the public access control gateway (3-7) that the station is authenticated (3-8) by the public access control gateway.

3. Access point (AP) according to claim 1 or 2,
when performing legacy association and authentication the access point being adapted to
- - setting a public access control gateway (PAC) timer (3-3) and if the timer has not expired (3-6), forwarding traffic (3-5) to and from a public access control gateway (PAC) using encapsulation (AP-PAC),
- - if the timer has expired (3-6) stopping (3-10) transferring traffic from the station between the access point and the public access control gateway (PAC).

4. Access point according to any preceding claim, wherein the forwarding of traffic (3-5) to and from a public access control gateway (PAC) allowing the public access control gateway (PAC) to transmit a web based login page to the legacy station (p. *4, line* 3-4) is performed using encapsulation (AP-PAC), and wherein if the station is authenticated by the public access control gateway (PAC), the access point being adapted to forwarding traffic to and from the station without encapsulation.

5. Access point according to any preceding claim wherein, the access point comprises an 802.1x switch which is opened (3-9) upon authentication by the public access gateway (PAC) so as to forward frames to and from the station.

6. Access point according to claim 1, wherein traffic is stopped between the access point and the public access control gateway (6-10), if a message (AP_PAC_remove_req) is received (6-7) from the public access control gateway (PAC), the message indicating that the station is not authenticated by the public access control gateway.

7. Access point according to claim 6, wherein
- if a 802.11i station is encountered and if a 802.11i association and authentication of the station is successful (6-4), transmitting (6-9) a message to the public access control gateway (PAC) (AP_PAC_ADD_REQ) indicative of the public access **con**trol gateway should open a 802.1x switch in the public access control gateway (PAC) for the station.

8. Access point according to claim 6 or 7, wherein if a message indicative of unsuccessful login (6-7) is received from the public access control gateway (PAC), moreover disassociating (6-10) the station.in question.

9. Access point according to any previous claim wherein the access point being adapted to using 802.1X authentication in the access point (3-4) for authentication an 802.11i capable station.

10. Method for access point (AP) being able to perform both legacy and 802.11i association and authentication, comprising the steps
- if a 802.11i station (STA) is encountered (3-2; 6-2), performing 802.11 i association and authentication and if successful (3-4), the access point effectuating that frames are forwarded to / from the station (3-9; 6-9),
- if a legacy station (STA) is encountered (3-2; 6-2),
- - performing legacy medium access control association and authentication (3-3; 6-3) and
- - if successful, continuing to forward traffic for the station to and from a public access control gateway (PAC) (3-5; 6-5) allowing the public access control gateway (PAC) to transmit a web based login page to the legacy station,
-- if the station is not authenticated (3-8; 6-7) by the public control access gateway, stopping (3-10; 6-10) transferring traffic for the station between the access point and the public access control gateway (PAC).

11. Method according to claim 10, wherein the authentication by the public control access gateway is determined as successful if a message (AP_PAC_add_req) is received from the public access control gateway (3-7) that the station is authenticated (3-8) by the public access control gateway.

12. Method according to claim 10 or 11,
when performing legacy association and authentication
- - setting a public access control gateway (PAC) timer (3-3) and if the timer has not expired (3-6), forwarding traffic (3-5) to and from a public access control gateway (PAC) using encapsulation (AP-PAC),
- - if the timer has expired (3-6) stopping (3-10) transferring traffic from the station between the access point and the public access control gateway (PAC).

13. Method according to any of claims 10-12, wherein the forwarding of traffic (3-5) to and from a public access control gateway (PAC) allowing the public access control gateway (PAC) to transmit a web based login page to the legacy station is performed using encapsulation (AP-PAC), and wherein if the station is authenticated by the public access control gateway (PAC), forwarding traffic to and from the station without encapsulation.

14. Method according to claim 10, wherein traffic is stopped between the access point and the public access control gateway (6-10), if a message AP_PAC_remove_req) is received (6-7) from the public access control gateway (PAC), the message indicating that the station is not authenticated by the public access control gateway.

15. Method according to claim 14, wherein
- if a 802-.11i station is encountered and if a 802.11i association and authentication of the station is successful (6-4), transmitting (6-9) a message to the public access control gateway (PAC) (AP_PAC_ADD_REQ) indicative of the public access control gateway should open a 802.1x switch in the public access control gateway (PAC) for the station,

16. Method according to claim 14 or 15, wherein if a message indicative of unsuccessful login (6-7) is received from the public access control gateway (PAC), moreover disassociating (6-10) the station in question.

17. Method according to any previous claim 10 - 16 wherein an 802.11i capable station is authenticated using 802.1X authentication in the access point (3-4).

## Patentansprüche

1. Zugriffspunkt (AP), der in der Lage ist, sowohl eine Alt- als auch 802.11i-Assioziierung und -Authentifizierung durchzuführen, wobei der Zugriffspunkt eine Einrichtung umfasst, die eingerichtet ist, um
- falls eine 802.11i-Station (STA) angetroffen wird (3-2; 6-2), eine 802.11i-Assoziierung und -Authentifizierung durchzuführen, und falls diese erfolgreich ist (3-4), den Zugriffspunkt zu veranlassen, dass Rahmen zu/von der Station weitergeleitet werden (3-9; 6-9),
- falls eine Altstation (STA) angetroffen wird (3-2; 6-2), der Zugriffspunkt eingerichtet ist, um
-- eine Alt-Medium-Access-Control-Assoziierung und -Authentifizierung durchzuführen (3-3; 6-3), und
-- falls diese erfolgreich ist, der Zugriffspunkt eingerichtet ist, um ein Weiterleiten von Verkehr für die Station zu und von einem öffentlichen Zugriffssteuer-Gateway (PAC) fortzusetzen (3-5; 6-5), was dem öffentlichen Zugriffssteuer-Gateway (PAC) ermöglicht, eine webbasierte Login-Seite zu der Altstation zu senden,
-- falls die Station nicht authentifiziert wird (3-8; 6-7) durch das öffentliche Steuerzugriffs-Gateway, der Zugriffspunkt eingerichtet ist, ein Übermitteln von Verkehr für die Station zwischen dem Zugriffspunkt und dem öffentlichen Zugriffssteuer-Gateway (PAC) anzuhalten (3-10; 6-10).

2. Zugriffspunkt gemäß Anspruch 1, wobei die Authentifizierung durch den öffentlichen Steuerzugriffs-Gateway als erfolgreich bestimmt wird, falls eine Nachricht (AP_PAC_add_req) von dem öffentlichen Zugriffssteuer-Gateway empfangen wird (3-7), dass die Station durch das öffentliche Zugriffssteuer-Gateway authentifiziert ist (3-8).

3. Zugriffspunkt (AP) gemäß Anspruch 1 oder 2,
wenn eine Altassoziierung und -Authentifizierung durchgeführt wird, der Zugriffspunkt eingerichtet ist, um
-- einen Zeitgeber eines öffentlichen Zugriffssteuer-Gateways (PAC) zu setzen (3-3), und falls der Zeitgeber nicht abgelaufen ist (3-6), Verkehr zu und von einem öffentlichen Steuerzugriffs-Gateway (PAC) unter Verwendung von Kapselung (AP-PAC) weiterzuleiten (3-5),
-- falls der Zeitgeber abgelaufen ist (3-6), ein Übermitteln von Verkehr von der Station zwischen dem Zugriffspunkt und dem öffentlichen Zugriffssteuer-Gateway (PAC) anzuhalten (3-10).

4. Zugriffspunkt gemäß einem der vorangegangenen Ansprüche, wobei das Weiterleiten von Verkehr (3-5) zu und von einem öffentlichen Zugriffssteuer-Gateway (PAC), was dem öffentlichen Zugriffssteuer-Gateway (PAC) ermöglicht, eine webbasierte Login-Seite zu der Altstation (Seite 4, Zeile 3 bis 4) zu senden, unter Verwendung von Kapselung (AP-PAC) durchgeführt wird, und wobei, falls die Station durch das öffentliche Zugriffssteuer-Gateway (PAC) authentifiziert wird, der Zugriffspunkt eingerichtet ist, um Verkehr zu und von der Station ohne Kapselung weiterzuleiten.

5. Zugriffspunkt gemäß einem der vorangegangenen Ansprüche, wobei der Zugriffspunkt einen 802.1x-Switch umfasst, der bei Authentifizierung durch das öffentliche Zugriffs-Gateway (PAC) geöffnet wird (3-9), um Rahmen zu und von der Station weiterzuleiten.

6. Zugriffspunkt (AP) gemäß Anspruch 1, wobei der Verkehr zwischen dem Zugriffspunkt und dem öffentlichen Zugriffssteuer-Gateway angehalten wird (6-10), falls eine Nachricht (AP_PAC_remove_req) von dem öffentlichen Zugriffssteuer-Gateway (PAC) empfangen wird (6-7), wobei die Nachricht anzeigt, dass die Station nicht durch das öffentliche Zugriffssteuer-Gateway authentifiziert ist.

7. Zugriffspunkt gemäß Anspruch 6, wobei
- falls eine 802.11i-Station angetroffen wird und falls eine 802.11i-Assoziierung und -Authentifizierung der Station erfolgreich ist (6-4), eine Nachricht zu dem öffentlichen Zugriffssteuer-Gateway (PAC) (AP_PAC_ADD_REQ) gesendet wird (6-9), die anzeigt, dass das öffentliche Zugriffssteuer-Gateway einen 802.1x-Switch in dem öffentlichen Zugriffssteuer-Gateway (PAC) für die Station öffnen soll.

8. Zugriffspunkt gemäß Anspruch 6 oder 7, wobei, falls eine Nachricht, die einen nicht erfolgreichen Login anzeigt (6-7), von dem öffentlichen Zugriffssteuer-Gateway (PAC) empfangen wird, des Weiteren die fragliche Station disassoziiert wird (6-10).

9. Zugriffspunkt gemäß einem der vorangegangen Ansprüche, wobei der Zugriffspunkt eingerichtet ist, um eine 802.1X-Authentifizierung in dem Zugriffspunkt zur Authentifizierung einer 802.11i-fähigen Station zu verwenden (3-4).

10. Verfahren für einen Zugriffspunkt (AP), der in der Lage ist, sowohl eine Alt- als auch eine 802.11i-Assoziierung und -Authentifizierung durchzuführen, mit den Schritten
- falls eine 802.11i-Station (STA) angetroffen wird (3-2; 6-2), Durchführen einer 802.11i-Assoziierung und -Authentifizierung, und falls diese erfolgreich ist (3-4), der Zugriffspunkt veranlasst wird, dass Rahmen zu/von der Station weitergeleitet werden (3-9; 6-9),
- falls eine Altstation (STA) angetroffen wird (3-2; 6-2),
-- Durchführen einer Alt-Medium-Access-Control-Assoziierung und - Authentifizierung (3-3; 6-3), und
-- falls diese erfolgreich ist, Fortsetzen eines Weiterleitens von Verkehr für die Station zu und von einem öffentlichen Zugriffssteuer-Gateway (PAC) (3-5; 6-5), was dem öffentlichen Zugriffssteuer-Gateway (PAC) ermöglicht, eine webbasierte Login-Seite zu der Altstation zu senden,
-- falls die Station durch den öffentlichen Zugriffssteuer-Gateway nicht authentifiziert wird (3-8; 6-7), Anhalten (3-10; 6-10) des Übermittelns von Verkehr für die Station zwischen dem Zugriffspunkt und dem öffentlichen Zugriffssteuer-Gateway (PAC).

11. Verfahren gemäß Anspruch 10, wobei die Authentifizierung durch das öffentliche Zugriffssteuer-Gateway als erfolgreich bestimmt wird, falls eine Nachricht (AP_PAC_add_req) von dem öffentlichen Zugriffssteuer-Gateway empfangen wird (3-7), dass die Station durch das öffentliche Zugriffssteuer-Gateway authentifiziert ist (3-8).

12. Verfahren gemäß Anspruch 10 oder 11,
beim Durchführen der Altassoziierung und -Authentifizierung
-- Setzen eines Zeitgebers (3-3) eines öffentlichen Zugriffssteuer-Gateways (PAC), und falls der Zeitgeber nicht abgelaufen ist (3-6), Weiterleiten von Verkehr (3-5) zu und von einem öffentlichen Zugriffssteuer-Gateway (PAC) unter Verwendung von Kapselung (AP-PAC),
-- falls der Zeitgeber abgelaufen ist (3-6), Anhalten (3-10) des Übermittelns von Verkehr von der Station zwischen dem Zugriffspunkt und dem öffentlichen Zugriffssteuer-Gateway (PAC).

13. Verfahren gemäß einem der Ansprüche 10 bis 12, wobei das Weiterleiten von Verkehr (3-5) zu und von einem öffentlichen Zugriffssteuer-Gateway (PAC), was dem öffentlichen Zugriffssteuer-Gateway (PAC) ermöglicht, eine webbasierte Login-Seite zu der Altstation zu senden, unter Verwendung von Kapselung (AP-PAC) durchgeführt wird, und wobei, falls die Station durch das öffentliche Zugriffssteuer-Gateway (PAC) authentifiziert wird, Weiterleiten von Verkehr zu und von der Station ohne Kapselung.

14. Verfahren gemäß Anspruch 10, wobei der Verkehr zwischen dem Zugriffspunkt und dem öffentlichen Zugriffssteuer-Gateway angehalten wird (6-10), falls eine Nachricht (AP_PAC_remove_req) von dem öffentlichen Zugriffssteuer-Gateway (PAC) empfangen wird (6-7), wobei die Nachricht anzeigt, dass die Station nicht durch das öffentliche Zugriffssteuer-Gateway authentifiziert ist.

15. Verfahren gemäß Anspruch 14, wobei
- falls eine 802.11i-Station angetroffen wird und falls eine 802.11i-Assoziierung und -Authentifizierung der Station erfolgreich ist (6-4), Senden (6-9) einer Nachricht zu dem öffentlichen Zugriffssteuer-Gateway (PAC) (AP_PAC_ADD_REQ), die anzeigt, dass das öffentliche Zugriffssteuer-Gateway einen 802.1x-Switch in dem öffentlichen Zugriffssteuer-Gateway (PAC) für die Station öffnen soll.

16. Verfahren gemäß Anspruch 14 oder 15, wobei, falls eine Nachricht, die einen nicht erfolgreichen Login anzeigt (6-7), von dem öffentlichen Zugriffssteuer-Gateway (PAC) empfangen wird, des Weiteren die fragliche Station disassoziiert (6-10) wird.

17. Verfahren gemäß einem der vorangegangenen Ansprüche 10 bis 16, wobei eine 802. 11i-fähige Station unter Verwendung einer 802.1X-Authentifizierung in dem Zugriffspunkt authentifiziert wird (3-4).

## Revendications

1. Point d'accès (AP) capable d'effectuer simultanément une association et une authentification de type existant et 802.11i, le point d'accès comprenant des moyens aptes à :
- si une station 802.11i (STA) est rencontrée (3-2 ; 6-2), effectuer une association et une authentification 802.11i et si celles-ci réussissent (3-4), faire en sorte que des trames soient réexpédiées vers/en provenance de la station (3-9 ;6-9) par le point d'accès,
- si une station existante (STA) est rencontrée (3-2 ; 6-2), faire en sorte que le point accès soit apte à :
-- effectuer une association et une authentification de contrôle d'accès au support de type existant (3-3 ; 6-3), et
-- si cela réussit, faire en sorte que le point d'accès soit apte à poursuivre la réexpédition du trafic destiné à la station vers et en provenance d'une passerelle de contrôle d'accès public (PAC) (3-6 ; 6-5) en permettant à la passerelle de contrôle d'accès public (PAC) de transmettre une page de connexion de type Web à la station existante,
-- si la station n'est pas authentifiée (3-8 ; 6-7) par la passerelle de contrôle d'accès public, faire en sorte que le point d'accès soit apte à interrompre (3-10 ; 6-10) le transfert de trafic destiné à la station entre le point d'accès et la passerelle de contrôle d'accès public (PAC).

2. Point d'accès selon la revendication 1, dans lequel l'authentification par la passerelle d'accès de contrôle public est déterminée comme ayant réussi si un message (AP_PAC_add_req) est reçu de la passerelle de contrôle d'accès public (3-7), selon lequel la station est authentifiée (3-8) par la passerelle de contrôle d'accès public.

3. Point d'accès (AP) selon la revendication 1 ou 2, **caractérisé en ce que** lorsqu'une association et une authentification de type existant sont effectuées, le point d'accès est apte à :
-- déclencher une temporisation (3-3) d'une passerelle de contrôle d'accès public (PAC) et, si la temporisation n'a pas expiré (3-6), réexpédier le trafic (3-5) vers et en provenance d'une passerelle de contrôle d'accès public (PAC) en utilisant une encapsulation (AP-PAC),
-- si la temporisation a expiré (3-6), interrompre (3-10) le trafic transféré depuis la station entre le point d'accès et la passerelle de contrôle d'accès public (PAC).

4. Point d'accès selon l'une quelconque des revendications précédentes, dans lequel la réexpédition du trafic (3-5) vers et en provenance d'une passerelle de contrôle d'accès public (PAC) permettant à la passerelle de contrôle d'accès public (PAC) de transmettre une page de connexion de type Web à la station existante (p.4, ligne 3-4) est effectuée en utilisant une encapsulation (AP-PAC), et dans lequel, si la station est authentifiée par la passerelle de contrôle d'accès public (PAC), le point d'accès est apte à réexpédier le trafic vers et en provenance de la station sans encapsulation.

5. Point d'accès selon l'une quelconque des revendications précédentes, dans lequel le point d'accès comprend un commutateur (802.1x) qui est ouvert (3-9) lors de l'authentification effectuée par la passerelle d'accès public (PAC) de façon à réexpédier des trames vers et en provenance de la station.

6. Point d'accès selon la revendication 1, dans lequel le trafic est interrompu entre le points d'accès et la passerelle de contrôle d'accès public (6-10), si un message (AP_PAC_remove_req) est reçu (6-7) de la passerelle de contrôle d'accès public (PAC), le message indiquant que la station n'est pas authentifiée par la passerelle de contrôle d'accès public.

7. Point d'accès selon la revendication 6, dans lequel
- si une station 802.11i est rencontrée et si une association et une authentification 802-11i de la station réussissent (6-4), un message est transmis (6, 9) à la passerelle de contrôle d'accès public (AP_PAC_add_req), indiquant que la passerelle de contrôle d'accès public doit ouvrir un commutateur 802.1x dans la passerelle de contrôle d'accès public (PAC) pour la station.

8. Point d'accès selon la revendication 6 ou 7, dans lequel, si un message indiquant une connexion non réussie (6-7) est reçu de la passerelle de contrôle d'accès public (PAC), la station en question est en outre dissociée (6-10).

9. Point d'accès selon l'une quelconque des revendications précédentes, dans lequel le point d'accès est apte à utiliser une authentification 802.1X dans le point d'accès (3-4) pour l'authentification d'une station à capacité 802.11i.

10. Procédé destiné à un point d'accès (AP) capable d'effectuer simultanément une association et une authentification de type existant et 802.11i, comprenant les étapes suivantes :
- si une station 802.11i (STA) est rencontrée (3-2 ; 6-2), effectuer une association et une authentification 802.11i et si cela réussit (3-4), faire en sorte que le point d'accès réexpédie des trames vers/en provenance de la station (3-9 ; 6-9),
- si une station existante (STA) est rencontrée (3-2 ; 6-2),
-- effectuer une association et une authentification de contrôle d'accès au support de type existant (3-3 ; 6-3), et
-- si cela réussit, poursuivre la réexpédition du trafic destiné à la station vers et en provenance d'une passerelle de contrôle d'accès public (PAC) (3-5 ; 6-5), cela permettant à la passerelle de contrôle d'accès public (PAC) de transmettre une page de connexion de type Web à la station existante,
-- si la station n'est pas authentifiée (3-8 ; 6-7) par la passerelle de contrôle d'accès public, interrompre (3-10 ; 6-10) le transfert de trafic destiné à la station entre le point d'accès et la passerelle de contrôle d'accès public (PAC).

11. Procédé selon la revendication 10, dans lequel l'authentification par la passerelle de contrôle d'accès public est déterminée comme ayant réussi si un message (AP_PAC_add_req) est reçu de la passerelle de contrôle d'accès public (3-7), selon lequel la station est authentifiée (3-8) par la passerelle de contrôle d'accès public.

12. Procédé selon la revendication 10 ou 11, **caractérisé en ce que**
lorsqu'une association et une authentification de type existant sont effectuées
-- une temporisation (3-3) de passerelle de contrôle d'accès public (PAC) est déclenchée et, si la temporisation n'a pas expiré (3-6), le trafic (3-5) vers et en provenance d'une passerelle de contrôle d'accès public (PAC) est réexpédié en utilisant une encapsulation (AP-PAC),
-- si la temporisation a expiré (3-6), le trafic transféré depuis la station entre le point d'accès et la passerelle de contrôle d'accès public (PAC) est interrompu.

13. Procédé selon l'une quelconque des revendications 10-12, dans lequel la réexpédition du trafic (3-5) vers et en provenance d'une passerelle de contrôle d'accès public (PAC) permettant à la passerelle de contrôle d'accès public (PAC) de transmettre une page de connexion de type Web à la station existante est effectuée en utilisant une encapsulation (AP-PAC), et dans lequel, si la station est authentifiée par la passerelle de contrôle d'accès public (PAC), le trafic vers et en provenance de la station est réexpédié sans encapsulation.

14. Procédé selon la revendication 10, dans lequel le trafic est interrompu entre le point d'accès et la passerelle de contrôle d'accès public (6-10) si un message (AP_PAC_remove_req) est reçu (6-7) de la passerelle de contrôle d'accès public (PAC), le message indiquant que la station n'est pas authentifiée par la passerelle de contrôle d'accès public.

15. Procédé selon la revendication 14, dans lequel
- si une station 802.11i est rencontrée et si une association et une authentification 802.11i de la station réussissent (6-4), un message est transmis (6-9) à la passerelle de contrôle d'accès public (PAC) (AP_PAC_add_req), indiquant que la passerelle de contrôle d'accès public doit ouvrir un commutateur 802.1x dans la passerelle de contrôle d'accès public (PAC) pour la station.

16. Procédé selon la revendication 14 ou 15, dans lequel, si un message indiquant une connexion non réussie (6-7) est reçu de la passerelle de contrôle d'accès public (PAC), la station en question est en outre dissociée (6-10).

17. Procédé selon l'une quelconque des revendications 10-16, dans lequel une station à capacité 802.11i est authentifiée en utilisant une authentification 802.1X dans le point d'accès 3-4.
